Europäisches Patentamt

European Patent Office

Office européen des brevets

(19)

(11) EP 1 098 856 B1

(12) FASCICULE DE BREVET EUROPEEN

(45) Date de publication et mention
de la délivrance du brevet:
**27.11.2002 Bulletin 2002/48**

(51) Int Cl.⁷: **C02F 11/14**

(86) Numéro de dépôt international:
**PCT/BE99/00081**

(21) Numéro de dépôt: **99926197.7**

(22) Date de dépôt: **23.06.1999**

(87) Numéro de publication internationale:
**WO 00/002823 (20.01.2000 Gazette 2000/03)**

(54) **PROCEDE DE TRAITEMENT DE BOUE**

VERFAHREN ZUR BEHANDLUNG VON KLÄRSCHLAMM

METHOD FOR TREATING SLUDGE

(84) Etats contractants désignés:
**AT BE DE DK FI FR GB LU NL SE**
Etats d'extension désignés:
**LT LV RO**

(30) Priorité: **09.07.1998 BE 9800524**

(43) Date de publication de la demande:
**16.05.2001 Bulletin 2001/20**

(73) Titulaire: **S.A. LHOIST RECHERCHE ET
DEVELOPPEMENT
1342 Ottignies-Louvain-La-Neuve (BE)**

(72) Inventeurs:
• **REMY, Marc, Joseph, Henri
B-1435 Mont-Saint-Guibert (BE)**
• **POISSON, Régis, Patrick, Marie, Hervé
F-92200 Neuilly-sur-Seine (FR)**
• **JUDENNE, Eric
F-75011 Paris (FR)**

(74) Mandataire: **Claeys, Pierre et al
Gevers & Vander Haeghen,
Hollidaystraat 5
1831 Diegem (BE)**

(56) Documents cités:
**US-A- 4 981 600          US-A- 5 557 873
US-A- 5 679 262**

• **PATENT ABSTRACTS OF JAPAN vol. 009, no.
104 (C-279), 8 mai 1985 (1985-05-08) & JP 59
230698 A (HITOSHI NAKAMORI;OTHERS: 01), 25
décembre 1984 (1984-12-25)**

**Description**

L'invention est relative à un procédé de traitement de boue comprenant

- une alimentation de boue à traiter à un mélangeur,
- une addition à la boue à traiter d'une quantité d'au moins un réactif alcalin,
- un mélange intime de la boue et dudit au moins un réactif alcalin, et
- un soutirage hors du mélangeur d'une boue traitée,
- ainsi qu'un dosage de la quantité ajoutée dudit au moins un réactif alcalin.

Dans la plupart des cas les boues issues de station d'épuration doivent pour des raisons légales et/ou pratiques être traitées avant leur évacuation de la station. Le chaulage de ces boues est une des voies de traitement utilisées.

Le traitement à la chaux d'une boue de station d'épuration présente plusieurs effets bénéfiques : la stabilisation de la boue par blocage de fermentation, son inertage par précipitation de la plupart des éléments-traces métalliques, sa structuration par assèchement, sa valorisation par enrichissement en calcium et son hygiénisation par destruction des micro-organismes pathogènes (DEWANDRE et al. Le chaulage des boues. L'eau, l'industrie, les nuisances, 1994, 174, 46-48).

Dans l'état actuel des choses la quantité de chaux ajoutée est estimée de façon approximative par l'exploitant de la station d'épuration de sorte que des quantités soit supérieures soit inférieures aux doses optimales sont dans bon nombre de cas appliquées aux boues. L'utilisation de quantités trop faibles de chaux présente pour l'exploitant plusieurs désavantages : l'impossibilité légale d'écouler sa boue (parce que la boue n'est pas hygiénisée dans le cas de la valorisation agronomique ou parce que la teneur en matière sèche finale de la boue n'est pas suffisante pour être mise en décharge), la présence ou la réapparition d'odeurs désagréables au cours du stockage et l'affaissement des tas de boue en cours du stockage qui entraînent des conflits d'intérêts entre riverains de zones de stockage et agriculteurs. L'utilisation de quantités excédentaires de chaux entraîne des surcoûts d'exploitation.

La fluctuation au cours du temps de la teneur en calcium de la boue après traitement est un autre inconvénient notoire généré par le non contrôle du taux de chaulage. En effet dans le cas où la boue est destinée à la valorisation agronomique, sa régularité de composition (N, P, K, Ca, ..) est un critère de qualité bien souvent pris en compte par l'agriculteur et le législateur.

Il est également connu que, dans la pratique, la détermination de la teneur en matière sèche requiert environ 24 heures. Actuellement, en station d'épuration, la teneur en matière sèche d'une boue est déterminée de la manière suivante : un échantillon de boue est pesé, puis passé à l'étuve à 105°C pendant 15h à 20 h. Il est ensuite à nouveau pesé. On détermine ainsi, par une longue méthode coûteuse, le taux de matière sèche de la boue à traiter, pour déterminer la quantité de réactif alcalin à ajouter à celle-ci. Cette méthode présente l'inconvénient supplémentaire qu'en 24 heures les propriétés d'une boue sont capables de changer et le taux d'erreur dans le dosage du réactif reste important.

Un procédé, tel qu'indiqué au début; est décrit en particulier dans le US-A-5401402. Dans ce brevet, la boue est mélangée, dans un mélangeur à vis, à de la chaux vive. La boue est déplacée par la vis de façon à en sortir sous forme de granulats. La quantité de chaux ajoutée est contrôlée en fonction de la hauteur de boue dans le mélangeur à vis ou en fonction du couple de résistance créé par la boue sur la vis. Ce procédé présente l'inconvénient d'être très sensible aux variations de la matière sèche de la boue avant traitement et aux fluctuations de la réactivité de la chaux. En effet, le couple de résistance créé dépend du degré d'avancement de la réaction chaux/boue, qui lui-même est influencé par la matière sèche de la boue avant traitement et par la réactivité de la chaux utilisée. Or, il est bien connu que ces deux paramètres peuvent varier assez fort, ce qui rend ce système imprécis. De plus, la détermination de la quantité à ajouter au départ ne peut se faire que de manière approximative. Elle ne peut être ajustée que par la suite, et toujours avec retard, d'où l'impossibilité d'obtenir un contrôle efficace du dosage en chaux pour obtenir les propriétés désirées des boues traitées.

Par ailleurs, on connaît déjà différents procédés pour mesurer les propriétés rhéologiques des pâtes, notamment des boues. Parmi plusieurs procédés on peut citer la pénétrométrie ou la scissométrie (v. A. POITOU et al, International Workshop, The Rheology of sludges, Bari, March 17, 1997). Diverses études fondamentales ont aussi été effectuées sur des boues, ces études ayant permis de montrer une relation exponentielle entre la cohésion des boues et leur teneur en matière sèche (v. par exemple K. WICHMAN et al, Mechanical properties of waterwork sludges-shear strength, Wat. Sci. Tech., Vol. 36, n° 11, p. 43-50, 1997; S. GAZBAR, Evaluation et amélioration des performances des procédés de déshydratation mécanique des boues résiduaires, thèse de doctorat soutenue le 13 décembre 1993 à l'Institut National de Polytechnique de Lorraine; J.-P. TISOT et J.-M. ABADIE, Characterisation of sludge and geometrical properties, International Workshop, The Rheology of sludges, Bari, March 17, 1997).

La présente invention a pour objet de mettre au point un procédé de traitement des boues qui soit simple et qui permette de bien prendre en compte les variations de la matière sèche de la boue non traitée, en vue de doser correctement le réactif alcalin à ajouter et cela même depuis le début du traitement. Un autre but est d'obtenir une boue présentant des propriétés préétablies, en particulier une cohésion sensiblement égale à la cohésion minimale nécessaire pour la manutention de la boue traitée et/ou une teneur en matière sèche permettant de respecter les exigences légales en matière de mise en décharge de boues ou en matière de valorisation de sols en agriculture.

Pour résoudre ce problème, on met en oeuvre un procédé tel que décrit au début, ce procédé étant, suivant l'invention, caractérisé en ce qu'il comprend en outre

- une mesure d'au moins une valeur de cohésion de la boue à traiter avant ou pendant ladite alimentation,
- un dosage de la quantité ajoutée dudit au moins un réactif alcalin pour obtenir une valeur prédéterminée de cohésion ou de teneur en matière sèche pour la boue après traitement, en fonction de ladite au moins une valeur de cohésion mesurée de la boue à traiter.

Par une simple mesure de la cohésion de la boue, par exemple par pénétrométrie ou scissométrie, on détermine aisément et rapidement une valeur de la boue qui est directement liée à sa teneur en matière sèche. Cette mesure préalable, qui peut se faire peu de temps avant le traitement de la boue, par exemple juste avant ladite étape de mélange, permet donc d'établir le dosage de la quantité de réactif à ajouter pour atteindre une boue dont les propriétés de cohésion, et donc de matière sèche, sont souhaitables. Avantageusement, le dosage prévoit préalablement une détermination de la valeur de teneur en matière sèche de la boue à traiter à partir de la fonction $C_1 = f(S_1)$, où $C_1$ représente la cohésion de la boue avant traitement et $S_1$ la teneur en matière sèche de cette boue. Après avoir choisi la valeur de matière sèche souhaitée $S_2$, on détermine la quantité adéquate de réactif à ajouter.

On peut signaler ici qu'à quantité égale ajoutée l'addition d'un réactif alcalin, tel que la chaux vive, entraînera une augmentation plus importante de la siccité que l'addition d'une phase inerte. On peut donc entendre, suivant l'invention, par réactif alcalin toute matière capable, en plus d'augmenter la siccité de la boue suite à l'apport de matière sèche, de diminuer la quantité d'eau présente dans la boue et cela suite à des phénomènes tels que :

1. La consommation d'eau liée à la formation d'une combinaison chimique, comme par exemple la formation d'hydroxyde de calcium, en cas d'ajout de chaux vive.
2. La vaporisation d'une quantité d'eau non négligeable engendrée par le dégagement de chaleur lié à une réaction exothermique entre le réactif alcalin et l'eau.
3. L'inclusion d'eau dans le volume poreux de l'hydroxyde formé.

Suivant une forme avantageuse de réalisation de l'invention, le procédé comprend

- une mesure d'au moins une valeur de cohésion additionnelle de la boue pendant ou après traitement,
- une comparaison entre chaque valeur de cohésion additionnelle mesurée et ladite valeur prédéterminée de cohésion pour la boue après traitement, et
- un éventuel ajustement du dosage de la quantité ajoutée dudit au moins un réactif alcalin pour obtenir ladite valeur prédéterminée de cohésion, en fonction de cette comparaison.

Cette forme de réalisation permet un contrôle extrêmement strict du procédé, même si les propriétés initiales de la boue ont tendance à varier. Avantageusement, ce procédé peut comprendre une détermination de la valeur de la teneur en matière sèche à partir de chaque mesure de cohésion, que ce soit de la mesure initiale ou des mesures additionnelles, à l'aide de la fonction directe précitée entre la cohésion et la teneur en matière sèche. La comparaison des valeurs se fait alors entre teneurs en matière sèche.

Suivant une forme de réalisation particulièrement avantageuse de l'invention, le procédé comprend

- avant le traitement, un étalonnage de la boue à traiter comportant une détermination d'une fonction spécifique pour cette boue entre les valeurs de cohésion et les valeurs de teneur en matière sèche de celle-ci,
- une sélection de ladite valeur prédéterminée, et
- ledit dosage par détermination préalable, à l'aide de ladite fonction spécifique, de la quantité à ajouter d'au moins un réactif alcalin, pour atteindre cette valeur prédéterminée.

Ce procédé est particulièrement préférable lorsque les propriétés de la boue à traiter ne sont pas connues au début du traitement ce qui est en particulier le cas de boues organiques, dont les propriétés sont souvent imprévisibles. Par un étalonnage préalable facile à exécuter, par exemple en faisant varier le taux d'humidité de la boue, on peut par mesures successives établir la courbe étalon de la boue qui illustre sa propre fonction cohésion-matière sèche. C'est cette fonction qui pourra alors être utilisée dans le traitement suivant l'invention de la boue et qui permettra de tenir compte de manière simple des variations de la matière sèche dans la boue à traiter.

Suivant une forme de réalisation perfectionnée de l'invention, le procédé comprend

- avant le traitement, un étalonnage additionnel de la boue, lors d'une addition à celle-ci de quantités variables dudit au moins un réactif alcalin, cet étalonnage comportant une détermination d'une fonction spécifique additionnelle pour cette boue traitée entre les valeurs de cohésion et les valeurs de teneur en matière sèche de celle-ci, et
- un éventuel ajustement du dosage de la quantité ajoutée dudit au moins un réactif alcalin, à l'aide de ladite fonction spécifique additionnelle, pour obtenir ladite valeur prédéterminée.

Cette procédure permet en particulier d'obtenir avec grande précision et éventuellement d'une façon automatisée des boues traitées présentant des valeurs de cohésion recherchées.

Suivant une forme de réalisation avantageuse du procédé suivant l'invention, il comprend

un traitement de la boue dans une première étape de mélange avec au moins un réactif alcalin, et dans une deuxième étape de mélange avec au moins un réactif alcalin et/ou au moins un additif inerte, et,

au moins pour une desdites étapes, au moins une mesure de valeur de cohésion additionnelle de la boue traitée et une éventuelle modification du dosage de la quantité ajoutée dudit au moins un réactif alcalin ainsi qu'éventuellement dudit au moins un additif inerte, pour obtenir ladite valeur prédéterminée pour la boue traitée.

Ce procédé permet, de manière simple, de réaliser des boues traitées présentant une composition plus équilibrée, en particulier si elles doivent être exploitées comme amendements de sol.

D'autres formes et modes de réalisation du procédé suivant l'invention sont indiqués dans les revendications.

D'autres détails et particularités de l'invention ressortiront de la description donnée ci-après, à titre non limitatif et avec référence aux dessins annexés.

La figure 1 représente d'une manière schématique un premier mode de réalisation du procédé suivant l'invention.

La figure 2 illustre la fonction cohésion-teneur en matière sèche d'une boue urbaine.

La figure 3 illustre la fonction cohésion-teneur en matière sèche d'une boue avant traitement et de la même boue traitée.

Les figures 4 et 5 représentent deux autres variantes de réalisation du procédé suivant l'invention.

La figure 6 représente l'évolution de la cohésion en fonction de la matière sèche, selon que l'on a ajouté à la boue de la chaux vive (carrés noirs) ou une phase solide inerte (triangles blancs).

La figure 7 représente de manière schématique un pénétromètre applicable dans le procédé suivant l'invention.

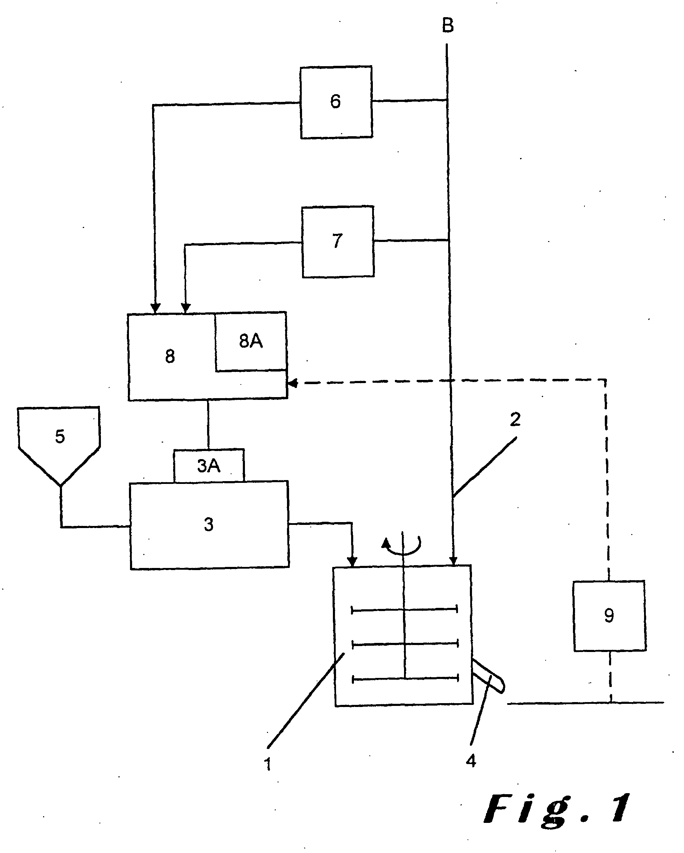

La figure 1 montre une première variante de procédé suivant l'invention. Dans ce procédé, on introduit en continu dans un mélangeur 1 par la conduite 2 la boue à traiter B et par un doseur 3 (par exemple un système comprenant une vis sans fin entraînée par un moteur 3A) au moins un réactif tel que de la chaux vive de granulométrie avantageusement inférieure à 5 mm (en particulier de 0,5 mm à 3 mm). On soutire en continu du mélangeur 1, par le conduit 4, la boue traitée par ledit réactif. Le réactif provient par exemple d'un silo 5.

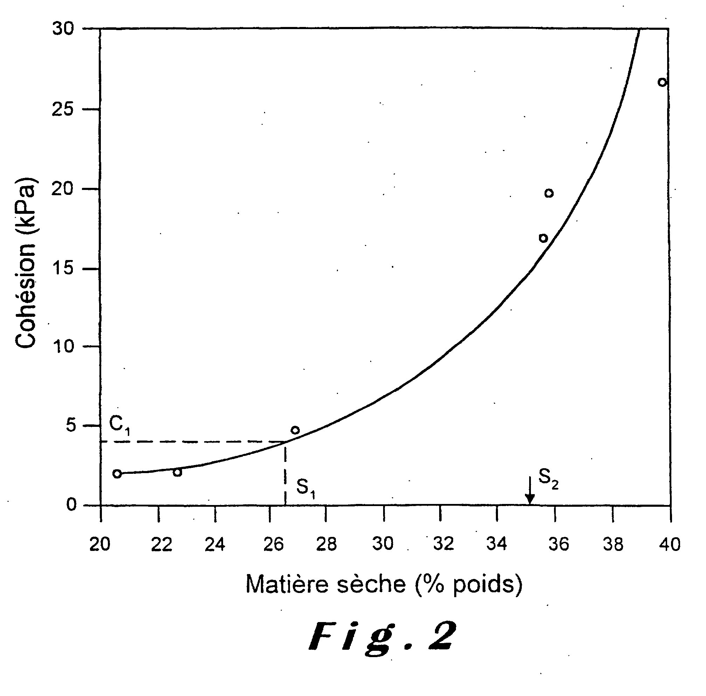

Dans ce procédé, soit les propriétés de la boue sont connues, soit, par des tests préalables, on caractérise la boue à traiter, en déterminant la fonction directe qui existe entre sa cohésion et sa teneur en matière sèche. Une telle fonction est obtenue en faisant des mesurés de cohésion de la boue par exemple à l'aide de dispositifs connus dans la littérature, comme des pénétromètres à cône, etc. On ajoute de l'eau pour déterminer la cohésion d'une boue de plus faible teneur en matière sèche ou après séchage partiel pour déterminer la cohésion d'une boue de teneur en matière sèche plus importante. La figure 2 donne un exemple d'une fonction cohésion-matière sèche établie pour une boue déshydratée venant d'une installation d'épuration d'eau urbaine. Une telle boue présenté une teneur en matière sèche comprise entre 10 et 50%, généralement comprise entre 15 et 40 % en poids.

Un appareil 6 de mesure (tel qu'un texturomètre, un scissomètre ou un pénétromètre ou un instrument analogue) permet de déterminer la cohésion de la boue à traiter, juste avant l'entrée de la boue dans le mélangeur 1. Cet appareil mesure par exemple toutes les 20 minutes la cohésion de la boue. Cette cohésion est généralement exprimée en kPa. On considère d'une manière générale que la cohésion d'une boue correspond à la contrainte à partir de laquelle elle se déforme. Il est connu que la tenue en tas d'une boue et sa pelletabilité sont liées à sa cohésion, d'où l'intérêt pour les exploitants de station d'épuration de contrôler la cohésion de leurs boues.

Un débitmètre 7 mesure en continu le débit de boue à traiter. Par débitmètre, il faut entendre tout instrument permettant non seulement de mesurer, mais aussi d'évaluer grossièrement le débit de boue, par exemple à partir de son poids.

Un appareil de contrôle 8, tel qu'un ordinateur, reçoit les informations de l'appareil 6 et du débitmètre 7. Cet appareil dispose d'un moyen 8A, tel qu'une mémoire ou une définition pour représenter la courbe cohésion-teneur en matière sèche de la boue à traiter. En fonction de la matière sèche souhaitée S2 et en fonction de la cohésion mesurée C1 par l'appareil 6, l'appareil 8 calcule ou détermine le taux de chaux vive nécessaire pour obtenir cette valeur en matière sèche désirée. Ce calcul peut être basé sur l'équation I suivante :

$$tc = \frac{100 \cdot \left( (S2 / S1) - 1 \right)}{1 + \left( 0{,}32 \cdot (Pc / 100) \right) - S2 / 100} \qquad \text{(I)}$$

dans laquelle

tc est le taux de chaulage exprimé en % massique par rapport à la matière sèche,

Pc est la proportion (exprimée en %) de CaO susceptible de se transformer en $Ca(OH)_2$ par réaction avec $H_2O$,

S1 est la teneur en matière sèche de la boue avant traitement exprimée en % massique et déterminée par la fonction précitée C1 = f(S1), et

S2 est la teneur en matière sèche de la boue après traitement exprimée en % massique, qui est la teneur recherchée.

Par exemple, dans le cas représenté sur la figure 2, après mesure de la cohésion C1, on détermine S1 et il y a lieu d'accroître alors la teneur en matière sèche d'environ 6 % pour atteindre la teneur désirée S2. Si on utilise l'équation 1, en prenant un Pc de 92 %, il y a lieu d'ajouter 31,5 % de chaux par rapport à la matière sèche initiale de la boue.

L'appareil 8 commande le moteur 3A qui entraîne en rotation la vis doseuse 3, en fonction de la dose de chaux vive nécessaire par kg de matière sèche de boue à traiter et en fonction du débit de matière sèche de boue à traiter, pour que le débit de chaux vive introduit dans le mélangeur corresponde sensiblement à la multiplication de la dose de chaux vive nécessaire par kg de matière sèche de boue à traiter par le débit de matière sèche de boue à traiter. La boue sortant du mélange a alors une teneur en matière sèche proche de celle souhaitée S2. Cette valeur souhaitée S2 à la sortie du mélangeur peut prendre en considération si nécessaire le fait que de la chaux réagit encore après la sortie de la boue traitée hors du mélangeur.

L'appareil 8 peut adapter ainsi toutes les 20 minutes la dose de chaux à introduire dans le mélange par kg de matière sèche de boue à traiter. Par ailleurs, l'appareil contrôle sensiblement depuis le début du procédé, en continu, le débit de chaux vive en fonction du débit de matière sèche de boue à traiter. Un tel contrôle n'était pas possible avec les appareils connus dans la technique.

Dans la forme représentée à la figure 1, il est possible mais non absolument nécessaire, de déterminer, à la sortie du mélangeur, la cohésion de la boue traitée. Un appareil 9, qui peut être du même type que l'appareil 6, mesure cette cohésion. Un signal est envoyé par cet appareil de mesure 9 vers l'appareil de contrôle 8 qui commande le débit de chaux vive ajouté au mélangeur. Si la cohésion déterminée par l'appareil 9 dévie de la cohésion désirée de plus d'une valeur de seuil préétablie, l'appareil 8 modifie automatiquement la dose de chaux par kg de matière sèche de boue à traiter d'un facteur approprié. Avantageuseusement, l'appareil de mesure 9 peut envoyer un signal vers l'appareil de contrôle 8 entre l'envoi de deux signaux par l'appareil de mesure 6.

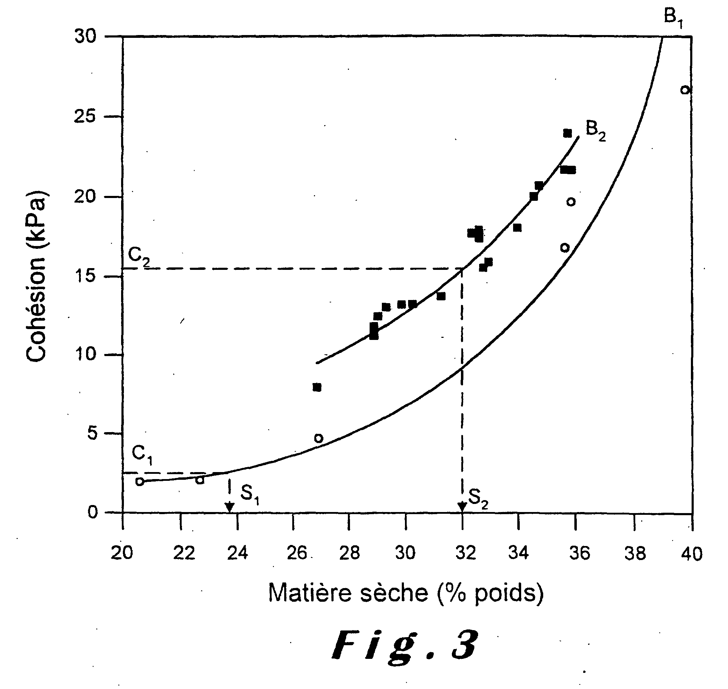

De même qu'il existe pour la boue B1 avant traitement une fonction exponentielle directe entre la cohésion de cette boue et sa teneur en matière sèche, il existe une autre fonction exponentielle directe entre la cohésion de cette même boue traitée B2 et sa teneur en matière sèche. La courbe illustrant cette fonction est obtenue en ajoutant des quantités variables de réactif alcalin à la boue à traiter. Cette fonction est du type C2 = f(S2) (voir figure 3).

Si l'on reprend le dispositif illustré sur la figure 1, on mesure la cohésion C1 de la boue à traiter par l'appareil 6.A l'aide de la courbe B1 de la figure 3, on peut en déduire la teneur en matière sèche de par exemple 23,5 % (S1). On préétablit la cohésion souhaitée C2, après traitement. Sur la courbe B2 à présent, on détermine la valeur de la teneur en matière sèche S2 à atteindre après traitement correspondant à cette cohésion C2. Dans le cas illustré, il s'agit d'une teneur de 32 %. On reprend alors l'équation I comme ci-dessus, pour déterminer le taux de chaulage à appliquer.

On peut prévoir un tel procédé sans appareil de contrôle 8 et les opérations sont alors commandées manuellement.

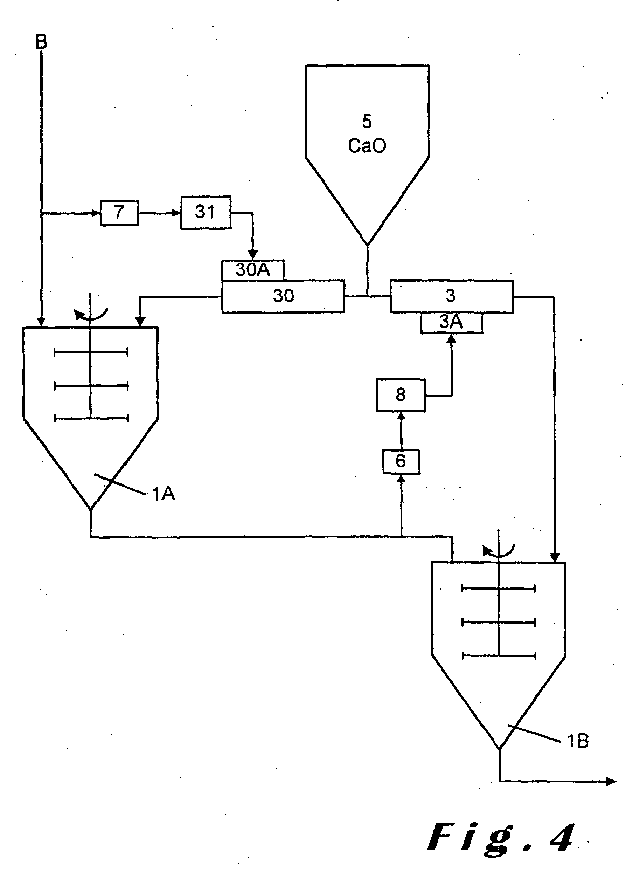

Le procédé de la figure 4 est un procédé similaire à celui de la figure 1, si ce n'est que le traitement de la boue est effectué en deux étapes au moyen d'un réactif alcalin, par exemple de chaux vive.

Dans la première étape, on traite la boue avec un débit minimal de réactif pour obtenir après cette première étape une boue traitée présentant une certaine cohésion (par exemple une cohésion d'au moins 5 kPa), ce débit minimal étant fonction du débit de boue brute. Cette première étape est alors réalisée dans un mélangeur 1A recevant la chaux vive par un doseur 30 dont le moteur d'entraînement 30A est commandé par un dispositif 31 recevant un signal d'un débitmètre 7 de boue à traiter entrant dans le mélangeur 1A. Dans la deuxième étape, on mesure la cohésion de la boue traitée dans la première étape par l'appareil 6 et, selon la fonction cohésion-matière sèche de cette boue prétraitée, on dose le réactif à introduire dans le mélangeur 1B pour obtenir après cette deuxième étape une boue traitée présentant une cohésion proche de la cohésion désirée. L'appareil 8 contrôle ainsi la vitesse de rotation du moteur 3A entraînant la vis de dosage 3 pour introduire dans le deuxième mélangeur 1B le débit de chaux nécessaire.

Dans ce procédé illustré à la figure 4, on peut évidemment prévoir qu'il comporte aussi un dosage du réactif alcalin au mélangeur 1A, qui soit mis en oeuvre de manière semblable au dosage du mélangeur 1 illustré sur la figure 1.

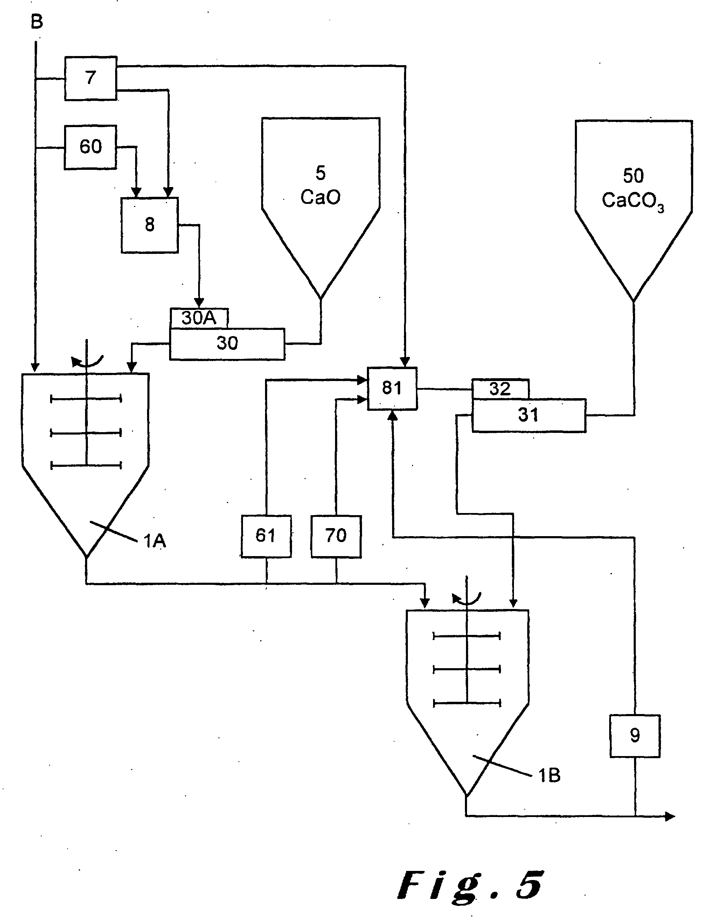

Le procédé suivant la figure 5 est un procédé utilisant d'une part, un réactif alcalin, tel que de la chaux vive, et, d'autre part, un additif inerte, tel que du carbonate de calcium. Dans un premier mélangeur 1A, on introduit une quantité de chaux vive (provenant du réservoir 5) par un doseur 30, le moteur 30A de ce doseur étant contrôlé par un appareil 8 recevant un signal d'un appareil de mesure de cohésion 60 et un signal d'un débitmètre 7. La boue traitée dans cette première étape est ensuite traitée au moyen de particules de $CaCO_3$ (provenant du réservoir 50) dans le mélangeur 1B. Ce carbonate de calcium est introduit par un doseur 31 entraîné par un moteur 32 dont la vitesse de rotation est contrôlée par un appareil de contrôle 81 recevant un signal d'un appareil de mesure 61 de la cohésion de la boue traitée par le réactif alcalin et du débitmètre 7 et/ou d'un débitmètre secondaire 70. La cohésion de la boue sortant du mélangeur 1B peut être mesurée par l'appareil de mesure 9. Un signal est envoyé par cet appareil de mesure 9 vers l'appareil de contrôle 81 du débit de carbonate de calcium ajouté au mélangeur 1B. Si la cohésion déterminée par l'appareil 9 est inférieure de plus d'une valeur seuil déterminée de la cohésion désirée, l'appareil 81 accroît automatiquement la dose de carbonate de calcium par kg de matière sèche de boue à traiter d'un facteur adéquat. Si la cohésion déterminée par l'appareil 9 est supérieure de plus. d'une valeur seuil déterminée, l'appareil 81 diminue automatiquement la dose de carbonate de calcium par kg de matière sèche de boue à traiter d'un facteur approprié.

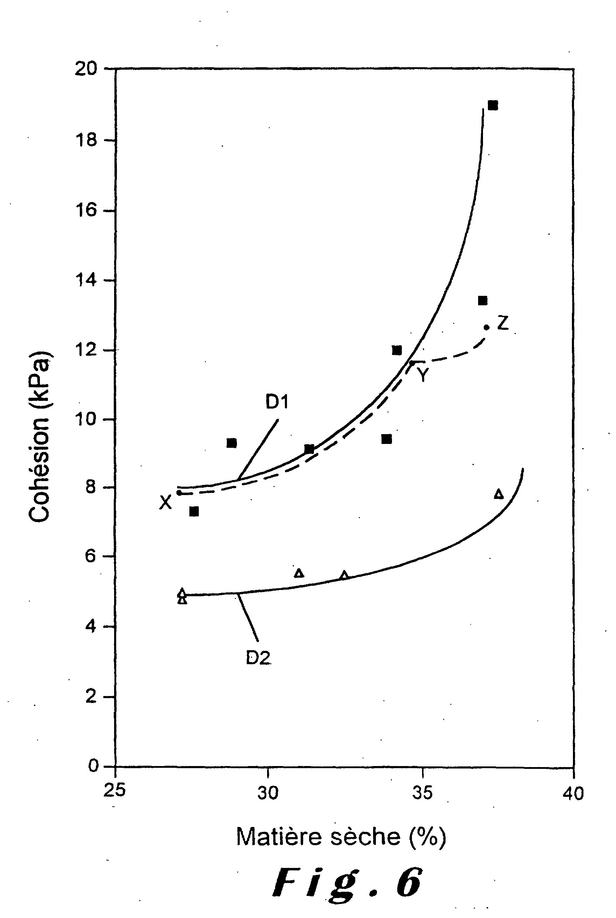

La figure 6 montre l'influence directe de l'ajout de chaux vive (courbe D1) et de carbonate de calcium (courbe D2) sur la cohésion d'une boue particulière. Ainsi qu'on peut le remarquer, l'ajout de chaux a un effet significatif sur la cohésion depuis de faibles teneurs en matière sèche. Au contraire, pour cette boue, un ajout de carbonate de calcium ne commence à avoir un effet sur la cohésion que lorsque la teneur en matière sèche de la boue est supérieure à 35 % en poids. Cette figure montre également que, pour des teneurs supérieures à 35 %, l'ajout de chaux vive à la boue accroît de manière très importante la cohésion, ce qui peut moins aisément contrôlable pour la boue considérée. L'utilisation du procédé à deux étapes utilisant un réactif alcalin et un additif inerte permet un réglage initial rapide de la cohésion au moyen du réactif (CaO) (courbe en traits interrompus x-y) et un réglage final au moyen de l'additif (carbonate de calcium) (courbe en traits interrompus y-z), permettant de préciser la composition souhaitée de la boue traitée.

En tant que réactif alcalin, on peut utiliser de la chaux vive, de la dolomie cuite, du ciment, des cendres volantes, des liants hydrauliques et des mélanges de ceux-ci. En tant qu'additif inerte à utiliser éventuellement de manière simultanée avec le réactif ou après utilisation du réactif, on peut citer des carbonates de calcium, de magnésium, de potassium, lesdits carbonates étant sous forme de roches broyées, de grains ou de poudre, du sable, des fibres cellulosiques, des fibres de papier, dès roches minérales broyées, des silicates, des aluminosilicates, des phosphates broyés ou en grains, des nitrates broyés ou en poudre ou en grains, de la limaille de fer, de la sciure de bois, etc. et des mélanges de ceux-ci. La quantité d'additif utilisé correspond avantageusement à moins de 25 % en poids de la quantité de réactif utilisé.

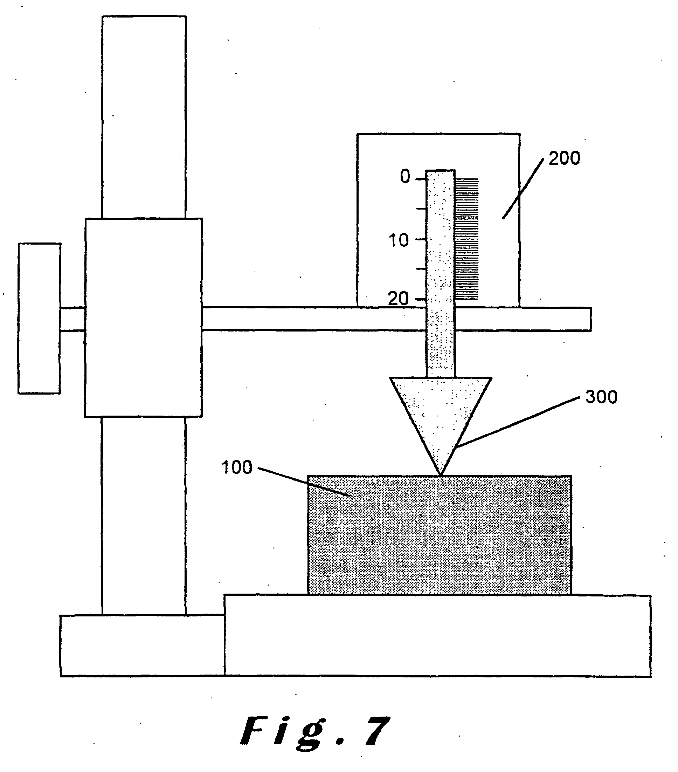

Sur la figure 7, on a illustré de manière schématique un dispositif de mesure de cohésion du type pénétromètre, utilisable dans le procédé suivant l'invention.

La boue est déplacée vers le mélangeur et elle passe dans une partie, ouverte vers le haut, d'un conduit 100. A cet endroit est supportée, au-dessus du conduit 100, une échelle graduée 200. Un cône de mesure 300 peut être lâché au-dessus du conduit 100 pour pénétrer dans la boue. On mesure alors au moyen de l'échelle graduée sa profondeur de pénétration.

Il doit être entendu que la présente invention n'est en aucune façon limitée aux modes de réalisation décrits ci-dessus et que bien des modifications peuvent y être apportées dans le cadre des revendications données ci-après.

**Revendications**

**1.** Procédé de traitement de boue comprenant.

- une alimentation de boue à traiter à un mélangeur,
- une addition à la boue à traiter d'une quantité d'au moins un réactif alcalin,
- un mélange intime de la boue et dudit au moins un réactif alcalin, et
- un soutirage hors du mélangeur d'une boue traitée,
- ainsi qu'un dosage de la quantité ajoutée dudit au moins un réactif alcalin

**caractérisé en ce qu'**il comprend en outre

- une mesure d'au moins une valeur de cohésion de la boue à traiter avant ou pendant ladite alimentation,
- un dosage de la quantité ajoutée dudit au moins un réactif alcalin pour obtenir une valeur prédéterminée de cohésion ou de teneur en matière sèche pour la boue après traitement, en fonction de ladite au moins une valeur de cohésion mesurée de la boue à traiter.

2. Procédé suivant la revendication 1, **caractérisé en ce qu'**il comprend

- une détermination d'une valeur de teneur en matière sèche de la boue à traiter à partir de chaque valeur de cohésion mesurée, et
- un dosage de la quantité ajoutée dudit au moins un réactif sur base d'au moins une valeur de teneur en matière sèche déterminée susdite.

3. Procédé suivant la revendication 1, **caractérisé en ce qu'**il comprend

- une mesure d'au moins une valeur de cohésion additionnelle de la boue pendant ou après traitement,
- une comparaison entre chaque valeur de cohésion additionnelle mesurée et ladite valeur prédéterminée de cohésion pour la boue après traitement, et
- un éventuel ajustement du dosage de la quantité ajoutée dudit au moins un réactif alcalin pour obtenir ladite valeur prédéterminée de cohésion, en fonction de cette comparaison.

4. Procédé de traitement de boue suivant la revendication 1, **caractérisé en ce qu'**il comprend en outre

- une mesure d'au moins une valeur de cohésion additionnelle de la boue pendant ou après traitement,
- une détermination d'une valeur de teneur en matière sèche de cette boue pendant ou après traitement, à partir de chaque valeur de cohésion additionnelle mesurée,
- une comparaison entre chaque valeur déterminée de teneur en matière sèche de cette boue pendant ou après traitement et ladite valeur de teneur en matière sèche prédéterminée pour la boue après traitement, et
- un éventuel ajustement du dosage de la quantité ajoutée dudit au moins un réactif alcalin pour obtenir la valeur de teneur en matière sèche prédéterminée pour la boue après traitement, en fonction de cette comparaison.

5. Procédé de traitement suivant l'une quelconque des revendications 1 à 4, **caractérisé en ce qu'**il comprend

- avant le traitement, un étalonnage de la boue à traiter comportant une détermination d'une fonction spécifique pour cette boue entre les valeurs de cohésion et les valeurs de teneur en matière sèche de celle-ci,
- une sélection de ladite valeur prédéterminée, et
- ledit dosage par détermination préalable, à l'aide de ladite fonction, de la quantité à ajouter d'au moins un réactif alcalin, pour atteindre cette valeur prédéterminée.

6. Procédé de traitement suivant l'une quelconque des revendications 1 à 5, **caractérisé en ce qu'**il comprend

- avant le traitement, un étalonnage additionnel de la boue, lors d'une addition à celle-ci de quantités variables dudit au moins un réactif alcalin, cet étalonnage comportant une détermination d'une fonction spécifique additionnelle pour cette boue traitée entre les valeurs de cohésion et les valeurs de teneur en matière sèche de celle-ci, et
- un éventuel ajustement du dosage de la quantité ajoutée dudit au moins un réactif alcalin, à l'aide de ladite fonction spécifique additionnelle, pour obtenir ladite valeur prédéterminée.

7. Procédé suivant l'une des revendications 5 et 6, **caractérisé en ce qu'**il comprend ladite mesure d'au moins une valeur de cohésion de la boue à traiter à intervalles successifs, et une éventuelle modification du dosage à la suite d'une modification des valeurs de cohésion successivement mesurées pour la boue à traiter, cette modification étant réalisée de manière appropriée sur base de ladite fonction.

8. Procédé suivant l'une quelconque des revendications précédentes, **caractérisé en ce qu'**il comprend un traitement de la boue dans une première étape de mélange avec au moins un réactif alcalin, et dans une deuxième étape de mélange avec au moins un réactif alcalin et/ou au moins un additif inerte, et, au moins pour une desdites étapes, au moins une détection de valeur de cohésion additionnelle de la boue traitée et une éventuelle modification du dosage de la quantité ajoutée dudit au moins un réactif alcalin ainsi qu'éventuellement dudit au moins un additif inerte, pour obtenir ladite valeur prédéterminée pour la boue traitée.

9. Procédé suivant l'une quelconque des revendications 1 à 8, **caractérisé en ce que** le réactif alcalin est choisi parmi le groupe comprenant de la chaux vive, de la dolomie cuite, du ciment, des liants hydrauliques, des cendres volantes et des mélanges de ceux-ci.

10. Procédé suivant l'une ou l'autre des revendications 8 et 9, **caractérisé en ce que** l'additif inerte est choisi parmi le groupe comprenant du carbonate de calcium, du carbonate de magnésium, du carbonate de potassium, du sable, des fibres cellulosiques, des fibres de papier, de la roche broyée, des silicates, des phosphates, des nitrates, de la limaille de fer, de la sciure de bois, des zéolites, de la silice, de l'alumine, de la sépiolite, des aluminosilicates et leurs dérivés, du charbon actif, du noir de carbone, de l'argile, des poussières d'électro-filtre et des mélanges de ceux-ci.

11. Procédé suivant l'une quelconque des revendications 1 à 10, **caractérisé en ce que** ladite détection d'au moins une valeur de cohésion comprend une mesure de pénétration d'un objet dans la boue.

**Patentansprüche**

1. Verfahren zur Behandlung von Klärschlamm, umfassend

    - die Zuführung des zu behandelnden Klärschlamms in einen Mischer,
    - die Zugabe von mindestens einem alkalischen Reagens zu dem zu behandelnden Klärschlamm,
    - das innige Vermischen des Klärschlamms und des mindestens einen alkalischen Reagens und die Entnahme eines behandelten Klärschlamms aus dem Mischer,
    - sowie das Dosieren der zugegebenen Menge an mindestens einem alkalischen Reagens, **dadurch gekennzeichnet, dass** er darüber hinaus die folgenden Schritte umfasst:

    - die Messung mindestens eines Kohäsionswerts des zu behandelnden Klärschlamms vor oder während der genannten Zuführung,
    - die Dosierung der zugegebenen Menge des mindestens einen alkalischen Reagens, um einen vorgegebenen Kohäsionswert oder Wert des Trockensubstanzgehaltes des Klärschlamms nach der Behandlung auf Grundlage des mindestens einen gemessenen Kohäsionswerts des zu behandelnden Klärschlamms zu erhalten.

2. Verfahren gemäß Anspruch 1, **dadurch gekennzeichnet, dass** es die folgenden Schritte umfasst:

    - die Bestimmung eines Werts für den Trockensubstanzgehalt des zu behandelnden Klärschlamms, ausgehend von jedem gemessenen Kohäsionswert, und
    - das Dosieren der zugegebenen Menge des mindestens einen Reagens auf Grundlage des mindestens einen Wertes des Trockensubstanzgehalts, wie vorstehend bestimmt.

3. Verfahren gemäß Anspruch 1, **dadurch gekennzeichnet, dass** es die folgenden Schritte umfasst:

    - die Messung von mindestens einem zusätzlichen Kohäsionswert des Klärschlamms während oder nach der Behandlung,
    - den Vergleich zwischen jedem zusätzlich gemessenen Kohäsionswert und dem für den Klärschlamm nach der Behandlung vorgegebenen Kohäsionswert und
    - gegebenenfalls die Anpassung der Dosierung der zugegebenen Menge des mindestens einen alkalischen Reagens, um den vorgegebenen Kohäsionswert auf Grundlage dieses Vergleichs zu erhalten.

4. Verfahren zur Behandlung von Klärschlamm gemäß Anspruch 1, **dadurch gekennzeichnet, dass** er darüber hinaus die folgenden Schritte umfasst:

    - das Messen mindestens eines zusätzlichen Kohäsionswerts des Klärschlamms während oder nach der Behandlung,
    - die Bestimmung eines Wertes für den Trockensubstanzgehalt des Klärschlamms während oder nach der Behandlung, ausgehend von jedem gemessenen zusätzlichen Kohäsionswert,
    - den Vergleich zwischen jedem bestimmten Wert für den Trockensubstanzgehalt des Klärschlamms während oder nach der Behandlung und dem Wert des Trockensubstanzgehalts, der für den Klärschlamm nach der Behandlung vorgegeben ist, und

- gegebenenfalls die Anpassung der Dosierung der zugegebenen Menge des mindestens einen alkalischen Reagens, um den vorgegebenen Wert für den Trockensubstanzgehalt des Klärschlamms nach der Behandlung auf Grundlage dieses Vergleichs zu erhalten.

5. Verfahren zur Behandlung gemäß einem der Ansprüche 1 bis 4, **dadurch gekennzeichnet, dass** es die folgenden Schritte umfasst:

   - die Kalibration des zu behandelnden Klärschlamms vor der Behandlung, umfassend eine Bestimmung der spezifischen Beziehung zwischen den Kohäsionswerten des Klärschlamms und dessen Werten für den Trockensubstanzgehalt,
   - die Festlegung des vorgegebenen Wertes,
   - die Dosierung nach vorhergehender Bestimmung der zuzugebenden Menge des mindestens einen alkalischen Reagens unter Zuhilfenahme der genannten Beziehung zum Erreichen dieses vorgegebenen Wertes.

6. Verfahren zur Behandlung gemäß einem der Ansprüche 1 bis 5, **dadurch gekennzeichnet, dass** es die folgenden Schritte umfasst:

   - eine zusätzliche Kalibration des Klärschlamms vor der Behandlung, unter Zugabe unterschiedlicher. Mengen des mindestens einen alkalischen Reagens, wobei die Kalibration eine Bestimmung einer zusätzlichen spezifischen Beziehung zwischen den Kohäsionswerten des behandelten Klärschlamms und den Werten für dessen Trockensubstanzgehalt umfasst, und
   - gegebenenfalls die Anpassung der zugegebenen Menge des mindestens einen alkalischen Reagens mit Hilfe der zusätzlichen spezifischen Beziehung, um den genannten vorbestimmten Wert zu erhalten.

7. Verfahren gemäß einem der Ansprüche 5 und 6, **dadurch gekennzeichnet, dass** es die folgenden Schritte umfasst:

   die Messung mindestens eines Kohäsionswerts des zu behandelnden Klärschlamms in aufeinander folgenden Intervallen und

   gegebenenfalls die Änderung der Dosierung als Folge einer Änderung der aufeinander folgend für den Klärschlamm gemessenen Kohäsionswerte, wobei die Änderung auf angemessene Weise auf Grundlage der genannten Beziehung durchgeführt wird.

8. Verfahren gemäß einem der vorhergehenden Ansprüche, **dadurch gekennzeichnet, dass** es die folgenden Schritte umfasst:

   die Behandlung des Klärschlamms in einem ersten Mischschritt mit mindestens einem alkalischen Reagens und in einem zweiten Mischschritt mit mindestens einem alkalischen Reagens und/oder mindestens einem inerten Zusatzstoff, und

   in mindestens einem der Schritte mindestens eine Bestimmung des zusätzlichen Kohäsionswertes des behandelten Klärschlamms und gegebenenfalls die Änderung der Dosierung der zugegebenen Menge des mindestens einen alkalischen Reagens sowie ggf. des mindestens einen inerten Zusatzstoffs, um den genannten vorgegebenen Wert des behandelten Klärschlamms zu erhalten.

9. Verfahren gemäß einem der Ansprüche 1 bis 8, **dadurch gekennzeichnet, dass** das alkalische Reagens ausgewählt ist aus Brandkalk, gebranntem Dolomit, Zement, hydraulischen Bindemitteln, Flugaschen und Gemischen daraus.

10. Verfahren gemäß einem der Ansprüche 8 und 9, **dadurch gekennzeichnet, dass** der inerte Zusatzstoff ausgewählt ist aus Calciumcarbonat, Magnesiumcarbonat, Kaliumcarbonat, Sand, Cellulosefasem, Papierfasern, vermahlenem Gestein, Silikaten, Phosphaten, Nitraten, Eiserispänen, Holzspänen, Zeolithen, Siliciumoxid, Aluminiumoxid, Sepiolith, Aluminosilicaten und ihren Derivaten, Aktivkohle, Ruß, Tonerde, Elektrofilterstäuben und Gemischen daraus.

11. Verfahren gemäß einem der Ansprüche 1 bis 10, **dadurch gekennzeichnet, dass** die Bestimmung des mindestens einem Kohäsionswerts die Messung des Eindringens eines Gegenstands in den Klärschlamm umfasst.

**Claims**

1. Sludge treatment method comprising

   - the supplying of sludge to be treated to a mixer,

   - the adding to the sludge to be treated of a quantity of at least one alkaline reagent,

   - close mixing of the sludge and the said at least one alkaline reagent, and

   - the drawing off of a treated sludge from the mixer,

   - as well as the apportioning of the added quantity of the said at least one alkaline reagent

   **characterised in that** it also comprises

   - the measuring of at least one cohesion value of the sludge to be treated before or during the said supply,

   - the apportioning of the added quantity of the said at least one alkaline reagent in order to obtain a predetermined cohesion or dry matter content value for the sludge after treatment, according to the said at least one measured cohesion value of the sludge to be treated.

2. Method according to Claim 1, **characterised in that** it comprises

   - the determining of a dry matter content value of the sludge to be treated from each measured cohesion value, and
   - the apportioning of the added quantity of the said at least one reagent on the basis of at least one above mentioned determined dry matter content value.

3. Method according to Claim 1, **characterised in that** it comprises

   - the measuring of at least one additional cohesion value of the sludge during and after treatment,

   - a comparison between each measured additional cohesion value and the said predetermined cohesion value for the sludge after treatment, and

   - possible adjustment of the apportioning of the added quantity of the said at least one alkaline reagent in order to obtain the said predetermined cohesion value, according to this comparison.

4. Sludge treatment method according to Claim 1, **characterised in that** it also comprises

   - the measuring of at least one additional cohesion value of the sludge during and after treatment,

   - the determining of a dry matter content value of the sludge during and after treatment, from each measured additional cohesion value,

   - a comparison between each determined dry matter content value of this sludge during and after treatment and the third predetermined dry matter content value for the sludge after treatment, and

   - possible adjustment of the apportioning of the added quantity of the said at least one alkaline reagent in order to obtain the predetermined dry matter content value for the sludge after treatment, according to this comparison.

5. Treatment method according to any one of Claims 1 to 4, **characterised in that** it comprises

   - before treatment, calibration of the sludge to be treated including a determination of a specific function for this sludge between the cohesion values and the dry matter content values thereof,

- selection of the said predetermined value, and

- the said apportioning by prior determination, by means of the said function, of the quantity to be added of at least one alkaline reagent, in order to achieve this predetermined value.

6. Treatment method according to any one of Claims 1 to 5, **characterised in that** it comprises

- before treatment, additional calibration of the sludge, during an addition to this of variable quantities of the said at least one alkaline reagent, this calibration including a determination of an additional specific function for this treated sludge between the cohesion values and the dry matter content values thereof, and

- possible adjustment of the apportioning of the added quantity of the said at least one alkaline reagent, using the said additional specific function, in order to obtain the said predetermined value.

7. Method according to one of Claims 5 and 6, **characterised in that** it comprises
the said measurement of at least one cohesion value of the sludge to be treated at successive intervals, and possible modification of the apportioning following a modification of the cohesion values successively measured for the sludge to be treated, this modification being carried out in an appropriate manner on the basis of the said function.

8. Method according to any one of the preceding claims, **characterised in that** it comprises
treatment of the sludge in a first mixing step with at least one alkaline reagent, and in a second mixing step with at least one alkaline reagent and/or at least one inert additive, and
at least for one of the said steps, at least a detection of an additional cohesion value of the treated sludge and a possible modification of the apportioning of the added quantity of the said at least one alkaline reagent as well as possibly of the said at least one inert additive, in order to obtain the said predetermined value for the treated sludge.

9. Method according to any one of Claims 1 to 8, **characterised in that** the alkaline reagent is chosen from amongst the group comprising quicklime, fired dolomite, cement, hydraulic binders, fly ash and mixtures thereof.

10. Method according to one or other of Claims 8 and 9, **characterised in that** the inert additive is chosen from amongst the group comprising calcium carbonate, magnesium carbonate, potassium carbonate, sand, cellulose fibres, paper fibres, crushed rock, silicates, phosphates, nitrates, iron filings, wood sawdust, zeolites, silica, alumina, sepiolite, aluminosilicates and derivates thereof, activated carbon, carbon black, clay, electrostatic filter dust and mixtures thereof.

11. Method according to any one of Claims 1 to 10, **characterised in that** the said detection of at least one cohesion value comprises a measurement of penetration of an object in the sludge.

*Fig. 1*

Fig. 2

*Fig.3*

*Fig.4*

Fig. 5

*Fig.6*

*Fig. 7*